# EUROPÄISCHE PATENTSCHRIFT

(11) **EP 1 468 520 B1**
(45) Veröffentlichungstag und Bekanntmachung des Hinweises auf die Patenterteilung: **02.12.2009**
(21) Anmeldenummer: 03731654.4
(22) Anmeldetag: 07.01.2003
(51) Int. Cl.: H04L 9/14

(54) **VERFAHREN ZUR DATENVERKEHRSSICHERUNG IN EINER MOBILEN NETZUMGEBUNG**
METHOD FOR SECURING DATA TRAFFIC IN A MOBILE NETWORK ENVIRONMENT
PROCEDE DE SECURISATION DU TRAFIC DE DONNEES DANS UN ENVIRONNEMENT DE RESEAU DE TELEPHONIE MOBILE

(30) Priorität: 24.01.2002 DE 10202689; 28.11.2002 DE 10255618
(43) Veröffentlichungstag der Anmeldung: 20.10.2004
(73) Patentinhaber: SIEMENS AKTIENGESELLSCHAFT, 80333 München (DE)
(72) Erfinder: EUCHNER, Martin, 81737 München (DE); MÖDERSHEIM, Sebastian, 79194 Gundelfingen (DE); TEJ, Haykal, 81677 München (DE); LOTZ, Volkmar, 80639 München (DE)
(86) Internationale Anmeldenummer: PCT/DE2003/000017
(87) Internationale Veröffentlichungsnummer: WO 2003/063409

(56) Entgegenhaltungen:
- WO-A-01/26322
- WO-A-02/03730
- PARK CH-S: "ON CERTIFICATE-BASED SECURITY PROTOCOLS FOR WIRELESS MOBILE COMMUNICATION SYSTEMS" IEEE NETWORK, IEEE INC. NEW YORK, US, Bd. 11, Nr. 5, 1. September 1997 (1997-09-01), Seiten 50-55, XP000699941 ISSN: 0890-8044

## Beschreibung

Die Erfindung betrifft ein Verfahren für eine mobile Netzumgebung zur Sicherung eines Datenverkehrs zwischen einem Fremdnetz und einem an das Fremdnetz gekoppelten Endgerät eines in einem Heimatnetz registrierten, mobilen Benutzers. Die Begriffe Heimatnetz und Fremdnetz können sich in diesem Zusammenhang auf verschiedene Netzwerke oder verschiedene logische oder physikalische Bereiche, Domänen oder Teilnetze eines Netzwerks beziehen.

Zeitgemäße mobile Netzumgebungen erlauben einem räumlich beweglichen Benutzer sich über dezentrale Endgeräte in Fremdnetzen einzukoppeln und über diese Zugang zu Kommunikations-und Applikationsdiensten nach Maßgabe seiner Berechtigung in seinem Heimatnetz zu erhalten. Ein jeweiliges Endgerät kann dabei ein temporär vom Benutzer genutzter Bestandteil des betreffenden Fremdnetzes oder ein temporär an das Fremdnetz gekoppeltes, mobiles Endgerät im Besitz des Benutzers sein.

Ein wesentliches Problem besteht in diesem Zusammenhang darin, Informationssicherheit insbesondere hinsichtlich einer Authentifizierung und Autorisierung des mobilen Benutzers und/oder des Endgeräts gegenüber dem Fremdnetz und/oder umgekehrt zu gewährleisten. Üblicherweise ist ein mobiler Benutzer und/oder ein von ihm genutztes mobiles Endgerät zunächst nur in seinem Heimatnetz und nicht im Fremdnetz registriert. Zur Authentifizierung und/oder Autorisierung des Benutzers kann im Fremdnetz eine Authentifizierungs- bzw. Autorisierungsanfrage an das Heimatnetz veranlasst werden und abhängig von einer Rückantwort eine Zugangserlaubnis erteilt werden. Bei der Anfrage und Rückantwort ist zu berücksichtigen, dass insbesondere bei Netzszenarien, die auf dem Internet basieren, ein jeweiliger Kommunikationsweg zwischen Fremd- und Heimatnetz über eine Vielzahl von Transitnetzen und Transitkomponenten verlaufen kann. Diese Transitnetze und Transitkomponenten sind jedoch potentiell unsicher und daher nicht vertrauenswürdig. Somit ist sowohl bei der Anfrage als auch bei der Rückantwort dafür zu sorgen, dass das Ergebnis der Anfrage durch unerlaubtes Abhören, Verfälschen oder Stören der in diesem Rahmen zwischen Fremd- und Heimatnetz zu übermittelnden Nachrichten nicht beeinträchtigt wird.

Ein derartiges Verfahren zur Datenverkehrssicherung in einer mobilen Netzumgebung ist bereits aus einer veröffentlichten Entwurfsfassung der ITU-T-Empfehlung H.235-Annex G bekannt.

Bei diesem Verfahren wird eine zum Datenaustausch zwischen dem Endgerät und dem Fremdnetz zu verwendende Schlüsselinformation vom Fremdnetz aus im Heimatnetz des Benutzers angefordert. Die angeforderte Schlüsselinformation wird vom Heimatnetz sukzessive über alle eventuell unsicheren Transitnetze zum Fremdnetz übertragen. Die Übertragung erfolgt abschnittsweise verschlüsselt unter der Annahme, dass zwischen benachbarten Netzen jeweils eine durch eine paarweise Vertrauensbeziehung abgesicherte verschlüsselte Übertragung gewährleistet ist. Diese nur paarweisen Vertrauensbeziehungen bedingen allerdings, dass die Schlüsselinformation bei jedem Netzübergang entschlüsselt und wieder verschlüsselt wird. Dadurch ist die Schlüsselinformation bei allen Netzübergängen im Klartext verfügbar, was ein nicht unerhebliches Sicherheitsrisiko darstellt. Ein unerlaubtes Eingreifen in den durch die Schlüsselinformation zu sichernden Datenaustausch zwischen dem Fremdnetz und dem Endgerät kann damit nicht ausgeschlossen werden.

Ein weiterer Nachteil des bekannten Verfahrens ist darin zu sehen, dass ein zur verschlüsselten Übertragung der Schlüsselinformation eingesetztes Verschlüsselungsverfahren eventuell nationale Export- oder Importbeschränkungen verletzen könnte. Dies ist insbesondere dann bedeutsam, wenn die verschlüsselt übertragene Schlüsselinformation selbst nicht zum Verschlüsseln sondern z.B. nur zur Authentifizierung oder Zertifizierung eingesetzt wird, was i.A. keinen gesetzlichen Beschränkungen unterliegt.

WO 02/03730 A zeigt ein Verfahren für eine mobile Netzumgebung zur Sicherung eines Datenverkehrs zwischen einem Fremdnetz und einem Endgerät eines Benutzers, bei dem der Benutzer in einem Heimatnetz mittels eines privaten Heimatschlüsselpaars authentifizierbar ist. In diesem Verfahren erzeugt Heimatnetzwerk aus Zufallszahlen und dem privaten Heimatschlüssel des Endgerätes Teilschlüssel und überträgt diese zu dem Fremdnetzwerk. Die Zufallszahlen werden an das Endgerät übertragen, das daraus die gleichen Teilschlüssel erzeugen kann. Endgerät und Fremdnetzwerk erzeugen einen gemeinsamen Schlüssel aus den Teilschlüsseln.

Es ist Aufgabe der vorliegenden Erfindung, ein einfaches und effizientes Verfahren zur Sicherung eines Datenverkehrs zwischen einem Fremdnetz und einem an das Fremdnetz gekoppelten Endgerät eines mobilen Benutzers anzugeben, durch das die oben angegebenen Nachteile vermieden werden.

Gelöst wird diese Aufgabe durch ein Verfahren mit den Merkmalen des Patentanspruchs 1.

Zur Sicherung des Datenverkehrs zwischen einem Fremdnetz und einem an das Fremdnetz gekoppelten Endgerät eines mobilen Benutzers, der in einem Heimatnetz mittels eines privaten Heimatschlüsselpaars authentifizierbar ist, erzeugen das Endgerät und eine Datensicherungseinrichtung des Fremdnetzes durch Austausch von - vorzugsweise öffentlichen - Teilschlüsseln ein privates Fremdschlüsselpaar. Die Datensicherungseinrichtung kann hierbei z.B. durch einen Server, einen Client oder eine Verbindungssteuerung, z.B. in Form eines sog. Gatekeepers, des Fremdnetzes realisiert sein. Erfindungsgemäß wird eine auf mindestens einem der Teilschlüssel basierende - vorzugsweise öffentliche - Schlüsselinformation sowie eine durch das Endgerät mittels eines ersten Heimatschlüssels des Heimatschlüsselpaars zertifizierte Meldung durch die Datensicherungseinrichtung in das Heimatnetz übermittelt. Hierbei versteht man im Folgenden unter dem Begriff "zertifizierte Meldung" insbesondere eine durch Prüfsummen gesicherte Meldung Im Heimatnetz wird daraufhin mittels eines zweiten Heimatschlüssels des Heimatschlüsselpaars die Zertifizierung der Meldung geprüft und ein Zertifikat für die Schlüsselinformation erstellt. Das erstellte Zertifikat wird zur Datensicherungseinrichtung übertragen und abhängig von einer Prüfung des übertragenen Zertifikats wird das private Fremdschlüsselpaar zur Sicherung des Datenverkehrs akzeptiert.

Das private Heimatschlüsselpaar und das private Fremdschlüsselpaar können hierbei jeweils durch ein symmetrisches oder durch ein asymmetrisches Schlüsselpaar realisiert sein. Im Falle eines symmetrischen Schlüsselpaars verfügen die jeweiligen Schlüsselinhaber über übereinstimmende private Schlüsselelemente. Bei asymmetrischen Schlüsselpaaren unterscheiden sich dagegen die privaten Schlüsselelemente der Schlüsselinhaber, sind aber hinsichtlich ihrer Schlüsselfunktion aufeinander bezogen.

Durch die Prüfung der vom Endgerät zertifizierten Meldung sowie des vom Heimatnetz erstellten Zertifikats der Schlüsselinformation kann die Identität des Endgerätes gegenüber der Datensicherungseinrichtung sowie die Authentizität eines oder mehrerer Teilschlüssel sichergestellt werden. Durch die Authentizität eines betreffenden Teilschlüssels kann der erzeugte private Fremdschlüssel ohne selbst anderen Netzeinrichtungen mitgeteilt werden zu müssen, als authentisch bestätigt werden. Ein auf diese Weise bestätigter Fremdschlüssel kann z.B. zur gesicherten Authentifizierung, Autorisierung und/oder zur Gewährleistung der Datenintegrität im Rahmen jeglichen nachfolgenden Datenverkehrs zwischen dem Endgerät und dem Fremdnetz genutzt werden.

Ein wesentlicher Vorteil der vorliegenden Erfindung besteht darin, dass weder der private Fremdschlüssel noch der private Heimatschlüssel zwischen dem Fremdnetz und dem Heimatnetz übertragen werden müssen. Dies führt insbesondere in Fällen, in denen sich zwischen Fremd- und Heimatnetz potentiell unsichere Transitnetze befinden, zu einer wesentlichen Erhöhung der Informationssicherheit gegenüber dem Stand der Technik.

Ein weiterer Vorteil der vorliegenden Erfindung besteht darin, dass zur Implementierung des erfindungsgemäßen Verfahrens nur geringfügige Änderungen an bestehenden Kommunikationssystemen, insbesondere Kommunikationssystemen gemäß der ITU-T-Empfehlung H.323, erforderlich sind. Weiterhin sind keine zusätzlichen Sicherheitsbeziehungen zwischen Netzinstanzen des Fremdnetzes, Heimatnetzes oder eventuellen Transitnetzen vorzusehen. Dies ist insbesondere bei fremdadministrierten Transitnetzen, wie z.B. dem Internet, sehr vorteilhaft.

Vorteilhafte Ausführungsformen und Weiterbildungen der Erfindung sind in den abhängigen Ansprüchen angegeben.

Nach einer vorteilhaften Ausführungsform der Erfindung kann das Zertifikat von der Datensicherungseinrichtung zum Endgerät übertragen und dort geprüft werden. Damit kann durch das Endgerät die Authentizität eines von der Datensicherungseinrichtung empfangenen Teilschlüssels und/oder die Authentizität der Datensicherungseinrichtung festgestellt werden.

Das Zertifikat kann ferner von der Datensicherungseinrichtung geprüft werden, um die Authentizität des Endgerätes sowie des von diesem übermittelten Teilschlüssels zu verifizieren.

Weiterhin kann vom Heimatnetz eine negative Authentifizierungsmeldung zur Datensicherungseinrichtung übermittelt werden, falls die Prüfung der Zertifizierung der Meldung zu einem negativen Prüfungsergebnis führt.

Gemäß einer besonders vorteilhaften Ausführungsform des erfindungsgemäßen Verfahrens kann das private Fremdschlüsselpaar mittels eines sog. Diffie-Hellman-Verfahrens erzeugt werden. Mittels eines solchen Verfahrens können zwei oder mehr Einrichtungen durch Austausch von öffentlichen Teilschlüsseln einen allen diesen Einrichtungen gemeinsamen, privaten Schlüssel berechnen. Dabei ist es - ausreichende Schlüssellänge vorausgesetzt - praktisch ausgeschlossen aus den öffentlichen Teilschlüsseln den gemeinsamen privaten Schlüssel abzuleiten.

Nach einer weiteren vorteilhaften Ausführungsform der Erfindung können die Meldung und die Schlüsselinformation im Rahmen einer Authentifizierungsanfrage in das Heimatnetz übermittelt werden. Darüber hinaus kann die Schlüsselinformation innerhalb der Meldung in das Heimatnetz übermittelt werden. Auf diese Weise kann eine gesonderte Übermittlung oder Signalisierung vermieden werden.

Weiterhin kann im Heimatnetz ein für die Meldung und die Schlüsselinformation gemeinsames Zertifikat erstellt und zur Datensicherungseinrichtung übertragen werden. Durch ein solches gemeinsames Zertifikat wird außer der Meldung und der Schlüsselinformation selbst, auch die Kombination dieser Meldung mit dieser Schlüsselinformation zertifiziert. D.h. anhand des Zertifikats kann verifiziert werden, dass diese Meldung genau dieser Schlüsselinformation zugeordnet ist. Eine missbräuchliche Verwendung der Meldung zusammen mit einer anderen Schlüsselinformation kann somit praktisch ausgeschlossen werden.

Alternativ dazu können für die Meldung und die Schlüsselinformation separate Zertifikate erstellt und zur Datensicherungseinrichtung übertragen werden.

Gemäß einer weiteren vorteilhaften Ausführungsform der Erfindung kann eine das Endgerät und/oder eine die Datensicherungseinrichtung identifizierende Kennung zur Zertifizierung in das Heimatnetz übermittelt werden. Vorzugsweise kann auch ein für diese Kennung und für die Meldung und/oder die Schlüsselinformation gemeinsames Zertifikat erstellt und zur Datensicherungseinrichtung übertragen werden. Anhand eines solchen Zertifikats kann verifiziert werden, dass diese Kennung genau dieser Meldung und/oder genau dieser Schlüsselinformation zugeordnet ist. Eine missbräuchliche Verwendung der Kennung im Zusammenhang mit einer anderen Meldung und/oder Schlüsselinformation kann somit praktisch ausgeschlossen werden.

Nach einer weiteren Ausführungsform des erfindungsgemäßen Verfahrens kann die Schlüsselinformation mittels einer arithmetischen und/oder logischen Verknüpfung mehrerer Teilschlüssel, z.B. mittels Addition, Multiplikation oder einer XOR-Verknüpfung, erzeugt werden. Darüber hinaus kann die Schlüsselinformation mittels einer arithmetischen und/oder logischen Verknüpfung mindestens eines Teilschlüssels mit einer vom Endgerät zusätzlich erzeugten Sicherungsinformation erzeugt werden. Eine solche Sicherungsinformation kann beispielsweise eine Zufallszahl oder ein Zeitstempel sein. Die Schlüsselinformation kann ferner einen oder mehrere unveränderte Teilschlüssel umfassen.

Weiterhin kann der Austausch der Teilschlüssel zwischen dem Endgerät und der Datensicherungseinrichtung im Rahmen von für den Datenaustausch mit dem Heimatnetz erforderlichen Datenübermittlungen zwischen Endgerät und Datensicherungseinrichtung erfolgen. Insbesondere kann der Austausch der Teilschüssel mit dem Authentifizierungsverkehr zwischen Fremd- und Heimatnetz synchronisiert oder in diesen integriert werden. Auf diese Weise kann die Anzahl der insgesamt auszutauschenden Nachrichten optimiert werden.

Gemäß einer weiteren vorteilhaften Ausführungsform der Erfindung kann der Datenaustausch zwischen der Datensicherungseinrichtung und dem Heimatnetz mittels Signalisierungsmeldungen gemäß der ITU-T-Empfehlung H.235 erfolgen. Das erfindungsgemäße Verfahren erfordert - im Gegensatz zum Stand der Technik - keine Erweiterung der H.235-Signalisierungsmeldungen, um den erforderlichen Datenaustausch durchzuführen.

Insbesondere kann die Erfindung auf einfache Weise in Kommunikationssystemen gemäß der ITU-Empfehlung H.323 oder - alternativ dazu - gemäß dem sog. SIP-Standard (SIP: Session Initiation Protocol) implementiert werden.

Gemäß einer vorteilhaften Weiterbildung der Erfindung kann wenigstens ein Teil der durch die Datensicherungseinrichtung in das Heimatnetz übermittelten Schlüsselinformation vom Heimatnetz zur Datensicherungseinrichtung übertragen werden, um dann abhängig von einer Prüfung des übertragenen Teils der Schlüsselinformation das private Fremdschlüsselpaar zur Sicherung des Datenverkehrs zu akzeptieren. Durch die Prüfung des von dem Heimatnetz an die Datensicherungseinrichtung übertragenen Teils der Schlüsselinformation wird ein Angriff auf die Netzumgebung verhindert, bei dem der Angreifer zunächst das von dem Heimatnetz an die Datensicherungseinrichtung übertragene Zertifikat abhört und anschließend mit diesem abgehörten Zertifikat ein nicht authentisches Endgerät authentifiziert. Dieser Angriff wird insbesondere dadurch vermieden, dass durch die Übermittlung von Schlüsselinformation an die Datensicherungseinrichtung eine Überprüfung dahingehend ermöglicht wird, ob die ursprünglich durch die Datensicherungseinrichtung an das Heimatnetz übermittelte Schlüsselinformation mit der übertragenen Schlüsselinformation korrespondiert. Wird keine Übereinstimmung festgestellt, wurde das an die Datensicherungseinrichtung übertragene Zertifikat nicht aktuell im Heimatnetz erzeugt. Würde an die Datensicherungseinrichtung lediglich das Zertifikat übertragen, könnte dieses nicht von der Datensicherungseinrichtung analysiert werden, da das Zertifikat mit einem Heimatschlüssel erzeugt wurde, der in der Datensicherungseinrichtung nicht bekannt ist. Hierdurch würde der oben beschriebene Angriff auf die Netzumgebung ermöglicht.

Nach einer vorteilhaften Ausführungsform der Erfindung wird der vom Heimatnetz zur Datensicherungseinrichtung übertragene Teil der Schlüsselinformation in der Datensicherungseinrichtung geprüft, wodurch bereits frühzeitig ein potentieller Angriff auf die Netzumgebung erkannt wird. Ferner wird vorzugsweise die gesamte in das Heimatnetz übermittelte Schlüsselinformation zur Datensicherungseinrichtung übertragen und überprüft. Zur Prüfung des vom Heimatnetz übertragenen Teils der Schlüsselinformation wird vorzugsweise ermittelt, ob der vom Heimatnetz übertragene Teil der Schlüsselinformation ein Teil der durch die Datensicherungseinrichtung in das Heimatnetz übermittelten Schlüsselinformation ist. Verläuft diese Überprüfung negativ, ist das zur Datensicherungseinrichtung übertragene Zertifikat nicht aktuell im Heimatnetz erstellt worden und das Verfahren wird abgebrochen.

Vorteilhafte Ausführungsbeispiele der Erfindung werden nachfolgend anhand der Zeichnung näher erläutert.

Dabei zeigen jeweils in schematischer Darstellung:
Fig 1 ein mehrere Kommunikationsnetze umfassendes Kommunikationssystem und
Fig 2 und Fig 3 jeweils ein Ablaufdiagramm zur Veranschaulichung eines Signalisierungsablaufs zur Datenverkehrssicherung.

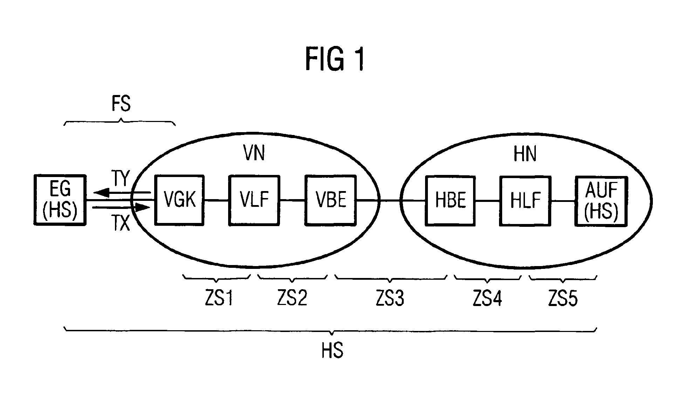

In Fig 1 ist ein Kommunikationssystem schematisch dargestellt, das ein Heimatnetz HN eines mobilen Benutzers sowie ein Fremdnetz VN umfasst, in das sich der mobile Benutzer über ein Endgerät EG einzukoppeln beabsichtigt. Ein solches Fremdnetz VN wird in der Fachsprache häufig auch als "visited network" bezeichnet. Das Heimatnetz HN und das Fremdnetz VN sind - gegebenenfalls über ein oder mehrere Transitnetze (nicht dargestellt) - miteinander gekoppelt. Das Heimatnetz HN und das Fremdnetz VN sind vorzugsweise als paketorientierte Netzwerke zur Echtzeitübertragung von Kommunikationsdaten, wie z.B. Sprach- Video- und/oder Multimediadaten, ausgestaltet. Vorzugsweise wird eine Kommunikationsumgebung gemäß der ITU-T-Empfehlung H.323 oder gemäß des SIP-Standards (Session Initiation Protocol) bereitgestellt. Das Endgerät EG kann ein temporär vom Benutzer genutzter Bestandteil des Fremdnetzes VN, z.B. ein Festnetztelefon oder ein Tischcomputer, oder ein temporär an das Fremdnetz VN gekoppeltes Endgerät, z.B. ein mobiles Endgerät oder ein tragbarer Computer sein.

Der mobile Benutzer bzw. das von ihm genutzte Endgerät EG ist im vorliegenden Ausführungsbeispiel zunächst nur in seinem Heimatnetz HN registriert und teilt mit diesem einen privaten Heimatschlüssel HS. Der Heimatschlüssel HS ist sowohl im Endgerät EG als auch in einer Authentifizierungseinrichtung AUF des Heimatnetzes HN gespeichert. Die Authentifizierungseinrichtung AUF, die häufig auch als "Authentication Function (AuF) bezeichnet wird, dient zur Authentifizierung und zur Autorisierung von Benutzern oder Endgeräten im Heimatnetz HN.

Im Fremdnetz VN und eventuellen Transitnetzen ist der Heimatschlüssel HS nicht bekannt. Der in der Authentifizierungseinrichtung AUF gespeicherte Heimatschlüssel und der im Endgerät EG gespeicherte Heimatschlüssel bilden im vorliegenden Ausführungsbeispiel ein symmetrisches Heimatschlüsselpaar. Die durch den gemeinsamen Heimatschlüssel HS eingerichtete Sicherheitsbeziehung zwischen dem Endgerät EG und der Authentifizierungseinrichtung AUF ist in Fig 1 durch eine geschweifte Klammer angedeutet.

Das Endgerät EG ist mit einem sog. Gatekeeper VGK (visited Gatekeeper) des Fremdnetzes VN gekoppelt, der unter anderem als Datensicherungseinrichtung und als Verbindungssteuerung für das Fremdnetz VN fungiert. Der Gatekeeper VGK ist über eine Benutzerverwaltungseinrichtung VLF (visitor location function) des Fremdnetzes VN, eine Netzübergangseinrichtung VBE (visited border element) des Fremdnetzes VN, eine Netzübergangseinrichtung HBE (home border element) des Heimatnetzes HN und eine Benutzerverwaltungseinrichtung HLF (home location function) des Heimatnetzes HN mit der Authentifizierungseinrichtung AUF gekoppelt.

Zwischen benachbarten Netzwerkeinrichtungen VGK, VLF, VBE, HBE, HLF bzw. AUF bestehen paarweise Sicherheitsbeziehungen, die jeweils durch ein privates Zwischenschlüsselpaar ZS1, ZS2, ZS3, ZS4 bzw. ZS5 gesichert sind. Im vorliegenden Ausführungsbeispiel verfügen der Gatekeeper VGK und die Benutzerverwaltungseinrichtung VLF über das gemeinsame Zwischenschlüsselpaar ZS1, die Benutzerverwaltungseinrichtung VLF und die Netzübergangseinrichtung VBE über das gemeinsame Zwischenschlüsselpaar ZS2, die Netzübergangseinrichtung VBE und die Netzübergangseinrichtung HBE über das gemeinsame Zwischenschlüsselpaar ZS3, die Netzübergangseinrichtung HBE und die Benutzerverwaltungseinrichtung HLF über das gemeinsame Zwischenschlüsselpaar ZS4 und die Benutzerverwaltungseinrichtung HLF und die Authentifizierungseinrichtung AUF über das gemeinsame Zwischenschlüsselpaar ZS5. Die Übertragungsstrecke zwischen dem Gatekeeper VGK und der Authentifizierungseinrichtung AUF ist somit abschnittsweise gesichert. Die paarweisen Sicherheitsbeziehungen sind in Fig 1 jeweils durch eine geschweifte Klammer angedeutet. Es sei an dieser Stelle angemerkt, dass eine oder mehrere der angegebenen Sicherheitsbeziehungen zwischen den Netzwerkeinrichtungen VGK, VLF, VBE, HBE, HLF und AUF auch entfallen können oder dass weitere Zwischeninstanzen mit analogen Sicherheitsbeziehungen zwischen dem Gatekeeper VGK und der Authentifizierungseinrichtung AUF angeordnet sein können, ohne dadurch das erfindungsgemäße Verfahren zu beeinträchtigen.

Erfindungsgemäß wird im Rahmen der Einkopplung des Benutzers bzw. des Endgerätes EG in das Fremdnetz VN zwischen dem Endgerät EG und dem Gatekeeper VGK ein privates Fremdschlüsselpaar FS durch Austausch von öffentlichen Teilschlüsseln TX und TY dynamisch ausgehandelt. Im vorliegenden Ausführungsbeispiel wird hierzu ein sog. Diffie-Hellman-Verfahren verwendet, bei dem beide privaten Schlüssel des ausgehandelten Fremdschlüsselpaars FS übereinstimmen. D.h. im Endgerät EG sowie im Gatekeeper VGK wird der gleiche Fremdschlüssel erzeugt und gespeichert. Die übereinstimmenden Fremdschlüssel des Fremdschlüsselpaars FS werden im Folgenden ebenfalls mit dem Bezugszeichen FS bezeichnet. Die durch das gemeinsame Fremdschlüsselpaar FS eingerichtete Sicherheitsbeziehung zwischen dem Endgerät EG und dem Gatekeeper VGK ist in Fig 1 durch eine geschweifte Klammer angedeutet.

Das zwischen dem Endgerät EG und dem Gatekeeper VGK ausgehandelte private Fremdschlüsselpaar FS kann zwar bereits einem Datenverkehr zwischen den beiden Verhandlungspartnern EG und VGK zugrunde gelegt werden, doch kann dieser Datenverkehr nur dann als sicher betrachtet werden, wenn die ausgetauschten Teilschlüssel TX und TY auch authentisch hinsichtlich ihrer Absender sind. Erfindungsgemäß wird deshalb zur Sicherstellung der Authentizität der Absender der Teilschlüssel TX, TY durch den Gatekeeper VGK eine Übermittlung einer Authentifizierungsanfrage in das Heimatnetz HN veranlasst.

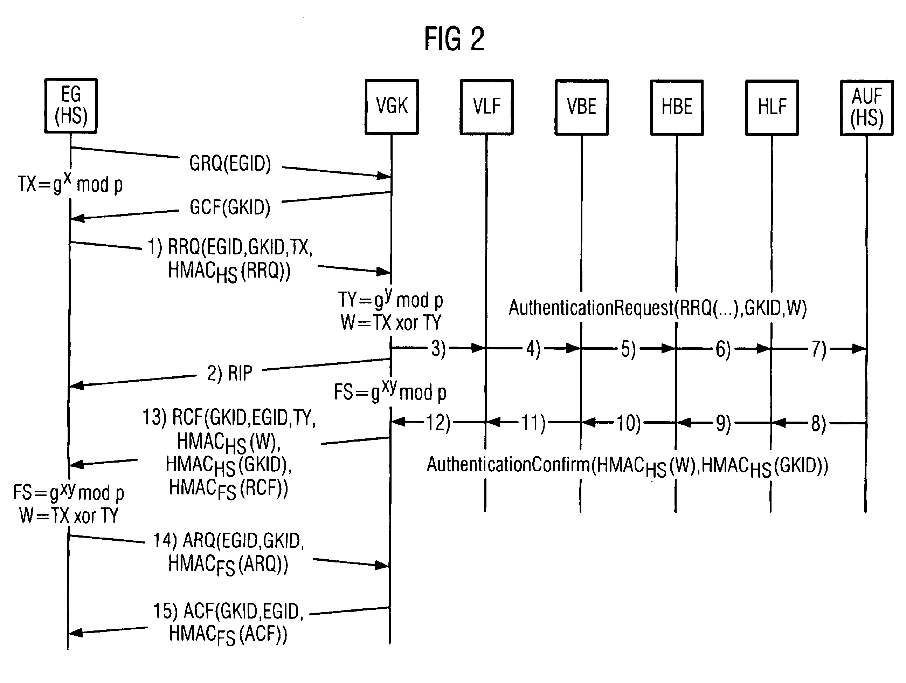

Fig 2 zeigt ein Ablaufdiagramm zur Veranschaulichung des Signalisierungsablaufs zur Sicherung des Datenverkehrs zwischen dem Endgerät EG und dem Fremdnetz VN.

Im Rahmen der Einkopplung des Benutzers bzw. des von ihm benutzten Endgerätes EG in das Fremdnetz wird zunächst vom Endgerät EG eine Meldung GRQ ('Gatekeeper Discovery Request' gemäß H.225.0-Empfehlung) zur Gatekeeperanfrage in das Fremdnetz VN übermittelt. Die Meldung GRQ enthält eine das Endgerät EG identifizierende Kennung EGID. Durch die Meldung GRQ wird der Gatekeeper VGK dazu veranlasst eine Bestätigungsmeldung GCF ('Gatekeeper Discovery Confirm' gemäß H.225.0-Empfehlung) für die Meldung GRQ zum durch die Kennung EGID identifizierten Endgerät EG zu übermitteln. Die Bestätigungsmeldung GCF umfasst eine den zuständigen Gatekeeper VGK identifizierende Kennung GKID.

Durch das Endgerät EG wird weiterhin im Rahmen des Diffie-Hellman-Verfahrens der Teilschlüssel TX nach der Rechenvorschrift TX = g^{x} mod p berechnet. Hierbei bezeichnen p eine vielstellige Primzahl, g eine Basiszahl kleiner als p, 'mod' die mathematische Modulo-Funktion und x eine durch das Endgerät EG erzeugte, private Zufallszahl kleiner als p-1.

Die nachfolgenden Übermittlungsschritte sind in Fig 2 gemäß ihrer zeitlichen Abfolge mit den Ziffern 1 bis 15 nummeriert.

Im Übermittlungsschritt 1 wird vom Endgerät EG eine Meldung RRQ zur Endgeräteregistrierung ('Registration Request' gemäß H.225.0-Empfehlung) zum Gatekeeper VGK übermittelt. Die Meldung RRQ enthält die Kennungen EGID und GKID und den berechneten Teilschlüssel TX. Weiterhin wird mit der Meldung RRQ ein Zertifikat HMAC_{HS}(RRQ) übermittelt, das vom Endgerät EG für diese Meldung RRQ mittels des Heimatschlüssels HS erstellt wurde. Hier und im Folgenden wird mit dem allgemeinen Ausdruck HMAC_{K}(M) ein mittels eines privaten Schlüssels K erstelltes Zertifikat für eine Information M bezeichnet. Vorzugsweise kann ein solches Zertifikat durch einen sog. keyed hashed message authentication code' oder durch eine digitale Signatur realisiert werden.

Durch den Empfang der Meldung RRQ wird der Gatekeeper VGK dazu veranlasst, seinerseits den Teilschlüssel TY nach der Rechenvorschrift TY = g^{y} mod p zu berechnen. y bezeichnet hierbei eine durch den Gatekeeper VGK erzeugte, private Zufallszahl kleiner als p-1. Der berechnete Teilschlüssel TY wird anschließend mit dem vom Endgerät EG empfangenen Teilschüssel TX zu einer Schlüsselinformation W = TX xor TY verknüpft. 'xor' bezeichnet hierbei eine logische Exklusiv-Oder-Verknüpfung.

Weiterhin wird durch den Gatekeeper VGK gemäß dem Diffie-Hellman-Verfahren aus den Teilschlüsseln TX und TY der private Fremdschlüssel FS nach der Rechenvorschrift FS = TX^{y} mod p = g^{x+y} mod p berechnet. Ein besonderer Vorteil des Diffie-Hellman-Verfahrens besteht darin, dass es auch bei Bekanntwerden der privaten Zufallszahl y bzw. x praktisch unmöglich ist, einen früher erzeugten, privaten Schlüssel abzuleiten. Diese Eigenschaft wird häufig auch als "perfect forward secrecy" bezeichnet. Diese Eigenschaft erhöht die Sicherheit des Verfahrens beträchtlich. Ein weiterer Vorteil des Diffie-Hellman-Verfahrens ist darin zu sehen, dass die an der Schlüsselerzeugung beteiligten Partner in symmetrischer Weise zu dem gemeinsamen Schlüssel beitragen. Auf diese Weise kann eine einseitig dominierte und gegebenenfalls schwache Schlüsselerzeugung vermieden werden.

Im Übermittlungsschritt 2 wird als Reaktion auf den Empfang der Meldung RRQ eine Bearbeitungsmeldung RIP ('Request in Progress' gemäß H.225-Empfehlung) vom Gatekeeper VGK zum Endgerät EG übertragen. Weiterhin wird durch den Gatekeeper VGK eine Authentifizierungsanfragemeldung AuthenticationRequest gebildet, die in den Übermittlungsschritten 3, 4, 5, 6 und 7 über die Benutzerverwaltung VLF, die Netzübergangseinrichtung VBE, die Netzübergangseinrichtung HBE und die Benutzerverwaltung HLF zur Authentifizierungseinrichtung AUF des Heimatnetzes HN übermittelt wird. Die Authentifizierungsanfragemeldung AuthenticationRequest enthält die durch das Endgerät EG zertifizierte Meldung RRQ, die Schlüsselinformation W und die Kennung GKID des Gatekeepers VGK. Darüber hinaus kann die Authentifizierungsanfragemeldung AuthenticationRequest jeweils zwischen benachbarten Netzwerkeinrichtungen übermittelte Zertifikate (nicht dargestellt) enthalten, die mittels der Zwischenschlüsselpaäre ZS1, ZS2, ZS3, ZS4 bzw. ZS5 erzeugt wurden.

Nach Empfang der Authentifizierungsanfragemeldung wird durch die Authentifizierungseinrichtung AUF die vom Endgerät mittels des Heimatschlüssels HS zertifizierte Meldung RRQ überprüft und so die Authentizität des Endgerätes festgestellt. Weiterhin werden durch die Authentifizierungseinrichtung AUF ein Zertifikat HMAC_{HS}(W) für die Schlüsselinformation W sowie ein Zertifikat HMAC_{HS}(GKID) für die Kennung GKID jeweils mittels des Heimatschlüssels HS erstellt. Sofern das Endgerät EG und der Gatekeeper VGK als authentisch befunden wurden, bildet die Authentifizierungseinrichtung AUF eine Authentifizierungsbestätigungsmeldung AuthenticationConfirm, die die Zertifikate HMAC_{HS}(W) und HMAC_{HS}(GKID) beinhaltet.

Die gebildete Authentifizierungsbestätigungsmeldung AuthenticationConfirm wird anschließend in den Übermittlungsschritten 8, 9, 10, 11 und 12 über die Benutzerverwaltung HLF, die Netzübergangseinrichtung HBE, die Netzübergangseinrichtung VBE und die Benutzerverwaltung VLF zum Gatekeeper VGK übertragen. Die Authentifizierungsbestätigungsmeldung AuthenticationConfirm kann jeweils zwischen benachbarten Netzwerkeinrichtungen übermittelte Zertifikate (nicht dargestellt) enthalten, die mittels der Zwischenschlüsselpaare ZS1, ZS2, ZS3, ZS4 bzw. ZS5 erzeugt wurden. Falls sich das Endgerät EG als nicht authentisch erweist, wird anstelle der Authentifizierungsbestätigungsmeldung AuthenticationConfirm eine negative Authentifizierungsmeldung AuthenticationReject (nicht dargestellt) von der Authentifizierungseinrichtung AUF zum Gatekeeper VGK übertragen.

Anhand der Authentifizierungsbestätigungsmeldung AuthenticationConfirm kann der Gatekeeper VGK die Authentizität und Autorisierung des Endgerätes EG sowie die Authentizität der Signalisierungsinformation W und damit des Teilschlüssels TX verifizieren. Bei positiver Verifikation wird der Fremdschlüssel FS vom Gatekeeper VGK als sicher akzeptiert. Weiterhin wird der Gatekeeper VGK durch den Empfang der Authentifizierungsbestätigungsmeldung dazu veranlasst, eine Bestätigungsmeldung RCF ('Registration Confirm' gemäß H.225.0-Empfehlung) für die Meldung RRQ im Übermittlungsschritt 13 zum Endgerät EG zu übertragen. Die Bestätigungsmeldung RCF beinhaltet die Kennungen GKID und EGID, den Teilschüssel TY, sowie die Zertifikate HMAC_{HS}(W) und HMAC_{HS}(GKID). Weiterhin wird mit der Bestätigungsmeldung RCF ein Zertifikat HMAC_{FS}(RCF) übermittelt, das vom Gatekeeper VGK für diese Bestätigungsmeldung RCF mittels des neu erstellten Fremdschlüssels FS erzeugt wurde.

Anhand des in der Bestätigungsmeldung RCF enthaltenen Teilschlüssels TY berechnet das Endgerät EG seinerseits den privaten Fremdschlüssel FS nach der Rechenvorschrift FS = TY^{x} mod p = g^{y*x} mod p sowie die Schlüsselinformation W = TX xor TY. Anhand des Fremdschlüssels FS, des Heimatschlüssels HS und der Schlüsselinformation W kann das Endgerät EG nunmehr die empfangenen Zertifikate HMAC_{HS}(W), HMAC_{HS}(GKID) und HMAC_{FS}(RCF) und damit die Authentizität des Gatekeepers VGK und des Teilschlüssels TY verifizieren. Bei positiver Verifikation wird der Fremdschlüssel FS vom Endgerät EG als sicher akzeptiert.

Anschließend wird im Übermittlungsschritt 14 vom Endgerät EG eine die Kennungen EGID und GKID enthaltende Zugangsanforderungsmeldung ARQ ('Admission Request' gemäß H.225.0-Empfehlung) zum Gatekeeper VGK übertragen. Mit der Zugangsanforderungsmeldung ARQ wird ein auf dem akzeptierten Fremdschlüssel FS basierendes Zertifikat HMAC_{FS}(ARQ) übermittelt. Die Zugangsanforderungsmeldung ARQ wird schließlich im Übermittlungsschritt 15 vom Gatekeeper VGK durch die ebenfalls mittels des Fremdschlüssels FS zertifizierte Zugangsbestätigungsmeldung ACF ('Admission Confirm' gemäß H.225.0-Empfehlung) bestätigt, wodurch das Endgerät EG sicher in das Fremdnetz VN eingekoppelt wird.

Aufgrund der gegebenenfalls rückwirkenden Verifikation der Teilschlüssel TX, TY und ihrer Absender durch das Endgerät EG und den Gatekeeper VGK bildet der Fremdschlüssel FS eine sichere Grundlage für die Absicherung des Datenverkehrs zwischen dem Endgerät EG und dem Fremdnetz VN. Da an der Erzeugung des Fremdschlüssels FS ausschließlich das Endgerät EG und der Gatekeeper VGK beteiligt sind und der erzeugte Fremdschlüssel FS nicht übertragen wird, gewährleistet das Verfahren gemäß dem vorliegenden Ausführungsbeispiel eine sehr hohe Informationssicherheit. Da weiterhin der Fremdschlüssel FS beim Einkoppeln des Benutzers bzw. des Endgerätes EG in das Fremdnetz VN neu erzeugt wird, ist es praktisch ausgeschlossen, dass sich ein Fremdnetz mit einem früher erzeugten Fremdschlüssel fremdmaskiert und sich auf diese Weise unerlaubten Zugang zu anderen Fremdnetzen verschafft. Ferner sei angemerkt, dass die Schlüsselinformation W keinerlei Rückschlüsse auf die privaten Zufallszahlen x und y oder auf den privaten Fremdschlüssel FS erlaubt.

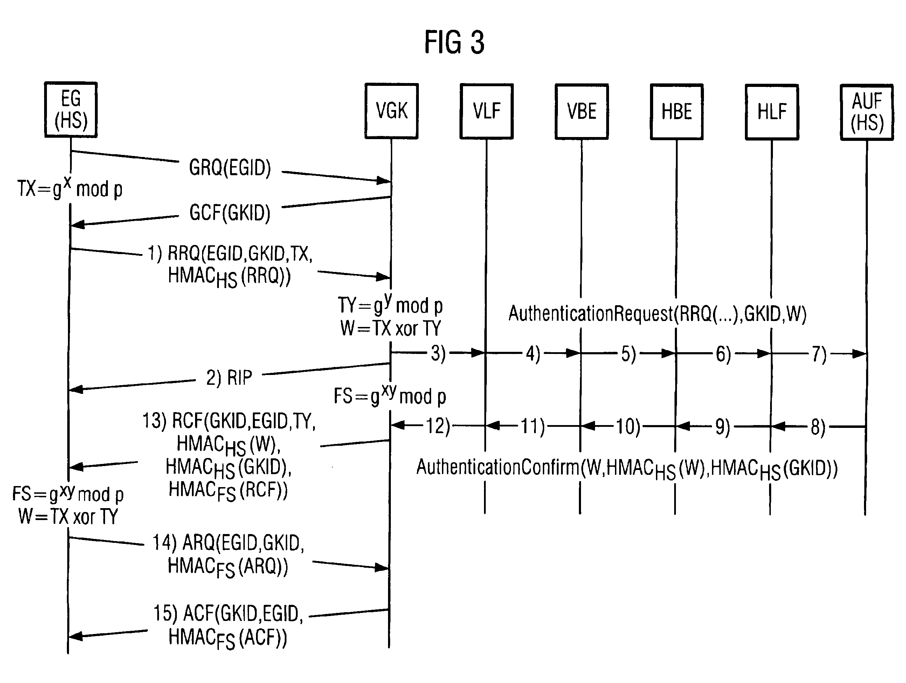

Eine Ausführungsvariante der Erfindung wird durch das in Fig 3 dargestellte Ablaufdiagramm veranschaulicht. Die Ausführungsvariante unterscheidet sich von der Ausführungsform gemäß Fig 2 durch eine zusätzliche Übermittlung der Schlüsselinformation W in der Authentifizierungsbestätigungsmeldung AuthenticationConfirm. Anhand der in der Authentifizierungsbestätigungsmeldung AuthenticationConfirm übermittelten Schlüsselinformation W kann der Gatekeeper VGK die Authentizität dieser Bestätigungsmeldung überprüfen, indem er die darin enthaltene Schlüsselinformation W mit der ursprünglich im Gatekeeper VGK erzeugten Schlüsselinformation vergleicht. Hierdurch wird ein Angriff auf die Netzumgebung verhindert, bei dem der Angreifer zunächst das Übertragungsprotokoll abhört und dann durch die Übermittlung der abgehörten Authentifizierungsbestätigungsmeldung an den Gatekeeper eine Authentifikation eines nicht authentischen Endgeräts ermöglicht.

Ein wesentlicher Vorteil des erfindungsgemäßen Verfahrens besteht darin, dass die Authentifizierungsanfrage sehr effizient und schnell durchführbar ist. Die Authentifizierungsanfrage kann in der Regel in sehr wenigen - im vorliegenden Ausführungsbeispiel nur zwei - Übermittlungsvorgängen zwischen Fremdnetz VN und Heimatnetz HN gebündelt werden. Die Übermittlung der Teilschüssel TX und TY zwischen Endgerät EG und Gatekeeper VGK kann vorteilhafterweise mit den Übermittlungsvorgängen der Authentifizierungsanfrage synchronisiert oder in diese integriert werden. Vorzugsweise wird eine Authentifizierungsanfrage nur einmal pro Einkoppelvorgang durchgeführt. Jeglicher nachfolgender Datenverkehr zwischen dem Endgerät EG und dem Fremdnetz VN kann dann mittels des lokalen Fremdschlüssels FS gesichert werden, ohne zusätzliche zeitverzögernde Anfragen an das Heimatnetz HN zu richten.

Ein weiterer Vorteil der Erfindung besteht darin, dass für die Übermittlungsvorgänge zwischen Fremdnetz VN und Heimatnetz HN keine eventuell gegen Exportbeschränkungen verstoßenden Datenverschlüsselungsverfahren eingesetzt werden müssen.

## Patentansprüche

1. Verfahren für eine mobile Netzumgebung zur Sicherung eines Datenverkehrs zwischen einem Fremdnetz (VN) und einem an das Fremdnetz (VN) gekoppelten Endgerät (EG) eines in einem Heimatnetz (HN) mittels eines privaten Heimatschlüsselpaars authentifizierbaren, mobilen Benutzers, wobei
a) das Endgerät (EG) und eine Datensicherungseinrichtung (VGK) des Fremdnetzes (VN) durch Austausch von Teilschlüsseln (TX, TY) ein privates Fremdschlüsselpaar (FS) erzeugen,
**dadurch gekennzeichnet, dass**
b) eine auf mindestens einem der Teilschlüssel (TX, TY) basierende Schlüsselinformation (W) sowie eine mittels eines ersten Heimatschlüssels (HS) des Heimatschlüsselpaars durch das Endgerät (EG) zertifizierte Meldung (RRQ) durch die Datensicherungseinrichtung (VGK) in das Heimatnetz (HN) übermittelt werden,
c) im Heimatnetz (HN) mittels eines zweiten Heimatschlüssels (HS) des Heimatschlüsselpaars die Zertifizierung der Meldung (RRQ) geprüft und ein Zertifikat (HMAC_{HS}(W)) für die Schlüsselinformation (W) erstellt wird,
d) das Zertifikat (HMAC_{HS}(W)) zur Datensicherungseinrichtung (VGK) übertragen wird, und
e) abhängig von einer Prüfung des vom Heimatnetz (HN) übertragenen Zertifikats (HMAC_{HS}(W)) das private Fremdschlüsselpaar (FS) zur Sicherung des Datenverkehrs akzeptiert wird.

2. Verfahren nach Anspruch 1,
**dadurch gekennzeichnet,**
**dass** das Zertifikat (HMAC_{HS}(W)) von der Datensicherungseinrichtung (VGK) zum Endgerät (EG) übertragen und dort geprüft wird.

3. Verfahren nach einem der vorhergehenden Ansprüche,
**dadurch gekennzeichnet,**
**dass** das Zertifikat (HMAC_{HS}(W)) von der Datensicherungseinrichtung (VGK) geprüft wird.

4. Verfahren nach einem der vorhergehenden Ansprüche,
**dadurch gekennzeichnet,**
**dass** eine negative Authentifizierungsmeldung vom Heimatnetz (HN) zur Datensicherungseinrichtung (VGK) übermittelt wird, falls die Prüfung der Zertifizierung der Meldung (RRQ) zu einem negativen Ergebnis führt.

5. Verfahren nach einem der vorhergehenden Ansprüche,
**dadurch gekennzeichnet,**
**dass** das private Fremdschlüsselpaar (FS) mittels eines sog. Diffie-Hellman-Verfahrens erzeugt wird.

6. Verfahren nach einem der vorhergehenden Ansprüche,
**dadurch gekennzeichnet,**
**dass** die Meldung (RRQ) und die Schlüsselinformation (W) im Rahmen einer Authentifizierungsanfrage (AuthenticationRequest) in das Heimatnetz (HN) übermittelt werden.

7. Verfahren nach einem der vorhergehenden Ansprüche,
**dadurch gekennzeichnet,**
**dass** die Schlüsselinformation (W) innerhalb der Meldung (RRQ) in das Heimatnetz (HN) übermittelt wird.

8. Verfahren nach einem der vorhergehenden Ansprüche,
**dadurch gekennzeichnet,**
**dass** ein für die Meldung (RRQ) und die Schlüsselinformation (W) gemeinsames Zertifikat erstellt und zur Datensicherungseinrichtung (VGK) übertragen wird.

9. Verfahren nach einem der vorhergehenden Ansprüche,
**dadurch gekennzeichnet,**
**dass** eine das Endgerät (EG) und/oder eine die Datensicherungseinrichtung (VGK) identifizierende Kennung (EGID, GKID) zur Zertifizierung in das Heimatnetz (HN) übermittelt wird.

10. Verfahren nach Anspruch 9,
**dadurch gekennzeichnet,**
**dass** ein für die Kennung (EGID, GKID) und für die Meldung (RRQ) und/oder die Schlüsselinformation (W) gemeinsames Zertifikat erstellt und zur Datensicherungseinrichtung (VGK) übertragen wird.

11. Verfahren nach einem der vorhergehenden Ansprüche,
**dadurch gekennzeichnet,**
**dass** die Schlüsselinformation (W) mittels einer arithmetischen und/oder logischen Verknüpfung mehrerer Teilschlüssel (TX, TY) erzeugt wird.

12. Verfahren nach einem der vorhergehenden Ansprüche,
**dadurch gekennzeichnet,**
**dass** die Schlüsselinformation (W) mittels einer arithmetischen und/oder logischen Verknüpfung mindestens eines Teilschlüssels (TX, TY) mit einer vom Endgerät (EG) zusätzlich erzeugten Sicherungsinformation erzeugt wird.

13. Verfahren nach einem der vorhergehenden Ansprüche,
**dadurch gekennzeichnet,**
**dass** der Austausch der Teilschlüssel (TX, TY) zwischen dem Endgerät (EG) und der Datensicherungseinrichtung (VGK) im Rahmen von für den Datenaustausch mit dem Heimatnetz (HN) erforderlichen Datenübermittlungen zwischen Endgerät (EG) und Datensicherungseinrichtung (VGK) erfolgt.

14. Verfahren nach einem der vorhergehenden Ansprüche,
**dadurch gekennzeichnet,**
**dass** der Datenaustausch zwischen der Datensicherungseinrichtung (VGK) und dem Heimatnetz (HN) mittels Signalisierungsmeldungen gemäß der ITU-T-Empfehlung H.235 erfolgt.

15. Verfahren nach einem der vorhergehenden Ansprüche,
**dadurch gekennzeichnet,**
**dass** wenigstens ein Teil der durch die Datensicherungseinrichtung (VGK) in das Heimatnetz (HN) übermittelten Schlüsselinformation (W) vom Heimatnetz (HN) zur Datensicherungseinrichtung (VGK) übertragen wird, und
**dass** abhängig von einer Prüfung des übertragenen Teils der Schlüsselinformation (W) das private Fremdschlüsselpaar (FS) zur Sicherung des Datenverkehrs akzeptiert wird.

16. Verfahren nach Anspruch 15,
**dadurch gekennzeichnet, dass** der übertragene Teil der Schlüsselinformation (W) in der Datensicherungseinrichtung (VGK) geprüft wird.

17. Verfahren nach Anspruch 15 oder 16,
**dadurch gekennzeichnet,**
**dass** die gesamte durch die Datensicherungseinrichtung (VGK) in das Heimatnetz (HN) übermittelte Schlüsselinformation (W) vom Heimatnetz (HN) zur Datensicherungseinrichtung (VGK) übertragen wird und geprüft wird.

18. Verfahren nach einem der Ansprüche 15 bis 17,
**dadurch gekennzeichnet,**
**dass** zur Prüfung des vom Heimatnetz (HN) übertragenen Teils der Schlüsselinformation (W) ermittelt wird, ob der vom Heimatnetz (HN) übertragene Teil der Schlüsselinformation (W) ein Teil der durch die Datensicherungseinrichtung (VGK) in das Heimatnetz (HN) übermittelten Schlüsselinformation (W) ist.

## Claims

1. Method for a mobile network environment for securing data traffic between an external network (VN) and a terminal (EG) of a mobile user that can be authenticated in a home location network (HN) by means of a private home location key pair, coupled to the external network (VN), whereby
a) the terminal (EG) and a data securing device (VGK) of the external network (VN) produce a private external key pair (FS) by exchanging partial keys (TX, TY), **characterised in that**
b) an item of key information (W) based on at least one of the partial keys (TX, TY) and a message (RRQ) certified by the terminal (EG) by means of a first home key (HS) of the home key pair are transmitted by the data securing device (VGK) to the home location network (HN),
c) certification of the message (RRQ) is verified in the home location network (HN) by means of a second home location key (HS) of the home location key pair and a certificate (HMAC_{HS}(W)) is produced for the key information (W),
d) the certificate (HMAC_{HS} (W) ) is transmitted to the data securing device (VGK), and
e) the private external key pair (FS) is accepted for securing the data traffic subject to verification of the certificate (HMAC_{HS} (W) ) transmitted from the home location network (HN).

2. Method according to claim 1,
**characterised in that**
the certificate (HMAC_{HS} (W) ) is transmitted from the data securing device (VGK) to the terminal (EG) and verified there.

3. Method according to one of the preceding claims,
**characterised in that**
the certificate (HMAC_{HS} (W) ) is verified by the data securing device (VGK).

4. Method according to one of the preceding claims,
**characterised in that**
a negative authentication message is transmitted from the home location network (HN) to the data securing device (VGK), if verification of the certification of the message (RRQ) produces a negative result.

5. Method according to one of the preceding claims,
**characterised in that**
the private external key pair (FS) is produced by means of what is known as the Diffie-Hellman method.

6. Method according to one of the preceding claims,
**characterised in that**
the message (RRQ) and the key information (W) are transmitted in the context of an authentication request (AuthenticationRequest) to the home location network (HN).

7. Method according to one of the preceding claims,
**characterised in that**
the key information (W) is transmitted within the message (RRQ) to the home location network (HN).

8. Method according to one of the preceding claims,
**characterised in that**
a common certificate is produced for the message (RRQ) and the key information (W) and transmitted to the data securing device (VGK).

9. Method according to one of the preceding claims,
**characterised in that**
a code (EGID, GKID) identifying the terminal (EG) and/or the data securing device (VGK) is transmitted to the home location network (HN) for certification.

10. Method according to claim 9,
**characterised in that**
a common certificate is produced for the code (EGID, GKID) and for the message (RRQ) and/or the key information (W) and transmitted to the data securing device (VGK).

11. Method according to one of the preceding claims,
**characterised in that**
the key information (W) is produced by means of an arithmetic and/or logical linking of a plurality of partial keys (TX, TY) .

12. Method according to one of the preceding claims,
**characterised in that**
the key information (W) is produced by means of an arithmetic and/or logical linking of at least one partial key (TX, TY) and security information also produced by the terminal (EG).

13. Method according to one of the preceding claims,
**characterised in that**
the exchange of partial keys (TX, TY) between the terminal (EG) and the data securing device (VGK) is effected in the context of data transmissions between the terminal (EG) and data securing device (VGK) as required for the exchange of data with the home location network (HN).

14. Method according to one of the preceding claims,
**characterised in that**
the exchange of data between the data securing device (VGK) and the home location network (HN) is effected by means of signalling messages according to the ITU-T recommendation H.235.

15. Method according to one of the preceding claims,
**characterised in that**
at least one part of the key information (W) transmitted by the data securing device (VGK) to the home location network (HN) is transmitted from the home location network (HN) to the data securing device (VGK) and that the private external key pair (FS) is accepted for securing the data traffic subject to verification of the transmitted part of the key information (W).

16. Method according to claim 15,
**characterised in that**
the transmitted part of the key information (W) is verified in the data securing device (VGK).

17. Method according to claim 15 or 16,
**characterised in that**
all the key information (W) transmitted by the data securing device (VGK) to the home location network (HN) is transmitted from the home location network (HN) to the data securing device (VGK) and verified.

18. Method according to one of claims 15 to 17,
**characterised in that**
to verify the part of the key information (W) transmitted from the home location network (HN) it is determined whether the part of the key information (W) transmitted from the home location network (HN) is part of the key information (W) transmitted by the data securing device (VGK) to the home location network (HN).

## Revendications

1. Procédé pour un environnement de réseau mobile pour la sécurisation d'un trafic de données entre un réseau extérieur (VN) et un terminal (EG) couplé au réseau extérieur (VN) d'un utilisateur de mobile, pouvant être identifié dans un réseau de rattachement (HN) au moyen d'une paire de codes privés de rattachement,
a) le terminal (EG) et un dispositif de sécurisation de données (VGK) du réseau extérieur (VN) générant une paire de codes extérieurs privés de rattachement (FS) par le remplacement de codes partiels (TX, TY), **caractérisé en ce que**
b) une information de code (W) basée sur au moins l'un des codes partiels (TX, TY) et un message (RRQ) certifié, au moyen d'un premier code de rattachement (HS) de la paire de codes de rattachement, par le terminal (EG) étant transmis par le dispositif de sécurisation de données (VGK) au réseau de rattachement (HN),
c) la certification du message (RRQ) étant testée dans le réseau de rattachement (HN) au moyen d'un second code de rattachement (HS) de la paire de codes de rattachement et un certificat (HMAC_{HS}(W) ) étant établi pour l'information de code (W),
d) ce certificat (HMAC_{HS}(W) ) étant transmis au dispositif de sécurisation de données (VGK), et
e) la paire de codes extérieurs privés (FS) pour la sécurisation du trafic de données étant acceptée en fonction d'un test du certificat (HMAC_{HS}(W) ) transmis par le réseau de rattachement (HN).

2. Procédé selon la revendication 1,
**caractérisé en ce que**
le certificat (HMAC_{HS}(W) ) étant transmis du dispositif de sécurisation de données (VGK) au terminal (EG) et testé au niveau de ce dernier.

3. Procédé selon l'une quelconque des revendications précédentes,
**caractérisé en ce que**
le certificat (HMAC_{HS}(W) ) est testé par le dispositif de sécurisation de données (VGK).

4. Procédé selon l'une quelconque des revendications précédentes,
**caractérisé en ce que**
un message d'authentification négatif est transmis du réseau de rattachement (HN) au dispositif de sécurisation de données (VGK) dans le cas où le test de la certification du message (RRQ) aboutit à un résultat négatif.

5. Procédé selon l'une quelconque des revendications précédentes,
**caractérisé en ce que**
la paire de codes extérieurs privés (FS) est générée au moyen d'un procédé de Diffie-Hellman.

6. Procédé selon l'une quelconque des revendications précédentes,
**caractérisé en ce que**
le message (RRQ) et l'information de code (W) sont transmis au réseau de rattachement (HN) dans le cadre d'une demande d'authentification (Authentication Request).

7. Procédé selon l'une quelconque des revendications précédentes,
**caractérisé en ce que**
l'information de code (W) est transmise à l'intérieur du message (RRQ) au réseau de rattachement (HN).

8. Procédé selon l'une quelconque des revendications précédentes,
**caractérisé en ce que**
un certificat commun pour le message (RRQ) et l'information de code (W) est établi et transmis au dispositif de sécurisation de données (VGK).

9. Procédé selon l'une quelconque des revendications précédentes,
**caractérisé en ce que**
un identificateur (EGID, GKID) identifiant le terminal (EG) et/ou le dispositif de sécurisation de données (VGK) est transmis pour la certification au réseau de rattachement (HN).

10. Procédé selon la revendication 9,
**caractérisé en ce que**
un certificat commun pour l'identificateur (EGID, GKID) et pour le message (RRQ) et/ou l'information de code (W) est établi et transmis au dispositif de sécurisation de données (VGK) .

11. Procédé selon l'une quelconque des revendications précédentes,
**caractérisé en ce que**
l'information de code (W) est générée au moyen d'une combinaison arithmétique et/ou logique de plusieurs codes partiels (TX, TY).

12. Procédé selon l'une quelconque des revendications précédentes,
**caractérisé en ce que**
l'information de code (W) est générée au moyen d'une combinaison arithmétique et/ou logique d'au moins un code partiel (TX, TY) avec une information de sécurisation générée en supplément par le terminal (EG).

13. Procédé selon l'une quelconque des revendications précédentes,
**caractérisé en ce que**
l'échange des codes partiels (TX, TY) entre le terminal (EG) et le dispositif de sécurisation de données (VGK) s'effectue dans le cadre de transmissions de données nécessaires pour l'échange de données avec le réseau de rattachement (HN) entre le terminal (EG) et le dispositif de sécurisation de données (VGK).

14. Procédé selon l'une quelconque des revendications précédentes,
**caractérisé en ce que**
l'échange de données entre le dispositif de sécurisation de données (VGK) et le réseau de rattachement (HN) s'effectue au moyen de messages de signalisation selon la recommandation de ITU-T H.235.

15. Procédé selon l'une quelconque des revendications précédentes,
**caractérisé en ce que**
au moins une partie de l'information de code (W) transmise par le dispositif de sécurisation de données (VGK) au réseau de rattachement (HN) est transmise du réseau de rattachement (HN) au dispositif de sécurisation de données (VGK), et **en ce que** la paire de codes extérieurs privés (FS) pour la sécurisation du trafic de données est acceptée en fonction d'un test de la partie transmise de l'information de code (W).

16. Procédé selon la revendication 15,
**caractérisé en ce que**
la partie transmise de l'information de code (W) est testée dans le dispositif de sécurisation de données (VGK).

17. Procédé selon la revendication 15 ou 16,
**caractérisé en ce que**
l'ensemble de l'information de code (W) transmise par le dispositif de sécurisation de données (VGK) au réseau de rattachement (HN) est transmis du réseau de rattachement (HN) au dispositif de sécurisation de données (VGK) et testé.

18. Procédé selon l'une quelconque des revendications 15 à 17,
**caractérisé en ce que**,
pour tester la partie transmise par le réseau de rattachement (HN), de l'information de code (W), on détermine si la partie, transmise par le réseau de rattachement (HN), de l'information de code (W) est une partie de l'information de code (W) transmise par le dispositif de sécurisation de données (VGK) au réseau de rattachement (HN).
